# EUROPÄISCHE PATENTANMELDUNG

(11) **EP 0 660 272 A2**
(43) Veröffentlichungstag der Anmeldung: **28.06.1995**
(21) Anmeldenummer: 94119365.8
(22) Anmeldetag: 08.12.1994
(51) Int. Cl.: G07C 1/26

(54) **Zeitnahmeeinrichtung für sportliche Wettbewerbe**

(30) Priorität: 22.12.1993 DE 9319760 U; 26.05.1994 DE 9408635 U
(71) Anmelder: DIEHL GMBH & CO., D-90478 Nürnberg (DE)
(72) Erfinder: Maul, Ludwig, D-92237 Sulzbach-Rosenberg (DE)

(57) **Zusammenfassung**

Eine Brieftaube erhält einen Ring mit einem elektronischen Transponder, der für die Wettbewerbs-Zeitnahme bei der Ankunft am Taubenschlag mittels eines Hochfrequenzfeldes abgefragt werden kann, um die Ankunftszeit dieser individuellen Taube zugeordnet abspeichern und später für Siegerlisten auswerten zu können. Zusätzlich trägt die Taube einen herkömmlichen (also nicht unbedingt automatisch ablesbaren) Ring mit der Meldenummer ihres Verbandes. Zwischen diesen beiden Datensätzen (elektronische Identnummer und konventionelle Verbandsnummer) besteht keine Beziehung, was den Züchter bei seiner Tauben-Zuordnung irritieren kann. Deshalb wird in das Bediengerät für die kontaktlose Hochfrequenz-Abfrage des Identträgers zusätzlich eine Tabelle eingespeist, in der die Identnummern und die Verbandsnummern der Tauben einander zugeordnet sind. Angezeigt wird auf dem Display dann nicht die elektronisch erfaßte Identnummer der gerade eingetroffenen Taube sondern die aus der Speichertabelle dazu ausgelesene, dem Züchter vertrautere konventionelle Verbandsnummer.

## Beschreibung

Die Erfindung betrifft eine Zeitnahmeeinrichtung gemäß dem Oberbegriff des Anspruchs 1.

Eine solche Zeitnahmeeinrichtung ist aus der EP 0 544 277 A2 der Anmelderin bekannt. Jeder Teilnehmer, dort jede Brieftaube, ist ständig mit einer einzigen koordinierten Registernummer ausgestattet, die nur einmal vorkommt, so daß jeder Teilnehmer eindeutig identifizierbar ist.

Der Erfindung liegt die Erkenntnis zugrunde, daß sich eine Zeitnahmeeinrichtung der eingangs genannten Art dahingehend weiterbilden läßt, daß sich eine noch gesteigerte Manipulationssicherheit ergibt und zugleich die übliche Identifikation (insbesonders der allgemein eingeführte Taubenring) verwendbar bleibt.

Diese Aufgabe wird bei einer Zeitnahmeeinrichtung der eingangs genannten Art erfindungsgemäß durch die Merkmale des kennzeichnenden Teiles des Anspruchs 1 gelöst. Danach ist jeder Teilnehmer mit einem weiteren Kennungsträger ausgestattet, der im Falle des Brieftaubensports eine die Taube ebenfalls individualisierende Verbandsnummer enthält, die der Verband vergibt, dem der Teilnehmer zugehörig ist. Zwischen der visuell nicht erkennbaren kodierten Registernummer und der visuell ablesbaren herkömmlichen Verbandsnummer besteht prinzipiell keine Beziehung. Die Nummern-Zuordnung jeden Wettkampfteilnehmers kann aber im Zuge des Einlesens seiner kodierten Registernummer tabellarisch in einen Speicher abgelegt werden. So ist für die zu meldenden Wettkampfteilnehmer eine Zuordnung zwischen ihren in ein Bediengerät elektronisch einlesbaren Registernummern und den im Alltag benutzten Verbandsnummern hergestellt. Dadurch kann die vertraute. Verbandsnummer angezeigt werden, wenn vom elektronischen Leser die gerade induktiv erfaßte kodierte Registernummer in ein Bediengerät übermittelt wird. Ein nicht tabellarisch erfaßter Teilnehmer (etwa eine Taube aus dem Nachbarschlag) ist leicht daran zu erkennen, daß er mangels abgespeicherter Verbandsnummer mit einer ganz anders aufgebauten, aus der Registernummer abgeleiteten Information am Bediengerät angezeigt wird. Dessen Anzeigeeinrichtung dient also der Anzeige einer elektronisch gelesenen dekodierten individuellen Registernummerninformation, wenn nicht deren Zuordnung zur anzuzeigenden Verbandsnummer abgespeichert ist.

Bei dem Tabellen-Speicher im Bediengerät handelt es sich vorzugsweise um einen nicht-flüchtigen überschreibbaren elektronischen Speicher. Durch solche Ausbildung der Zeitnahmeeinrichtung ist es einfach möglich, eine aktuell interessierende Zuordnung zwischen individueller kodierter elektronischer Registernummer und individueller Verbandsnummer jederzeit zu aktualisieren. Andererseits kann die aktuell abzulegende Tabelle nur nach zuvor gelöschtem Zustand des Speichers in das Bediengerät eingelesen werden, um unerlaubte Manipulationen während eines sich anschließenden Wettbewerbes auszuschließen.

Das dem Antennen-Lesegerät zum Erfassen der kodierten Registernummern nachgeschaltete Bediengerät ist zweckmäßigerweise auch an einen Drucker und/oder an einen zentralen Auswerte-Computer anschließbar, um die Wettbewerbsergebnisse dauerhaft dokumentieren bzw. automatisch auswerten zu können.

Die mit der erfindungsgemäßen Zeitnahmeeinrichtung erzielten Vorteile etwa beim Brieftaubensport bestehen also insbesondere auch darin, daß ein Züchter seine registrierten Tauben bei der elektronischen Erfassung sofort und ohne Umwege anhand der vertrauten Verbandsnummern identifizieren kann, da die Einrichtung jeden mit der Verbandszuordnung abgespeicherten Teilnehmer dann unmittelbar mit der Verbandsnummer auf der Anzeigeeinrichtung des Bediengerätes ausweist.

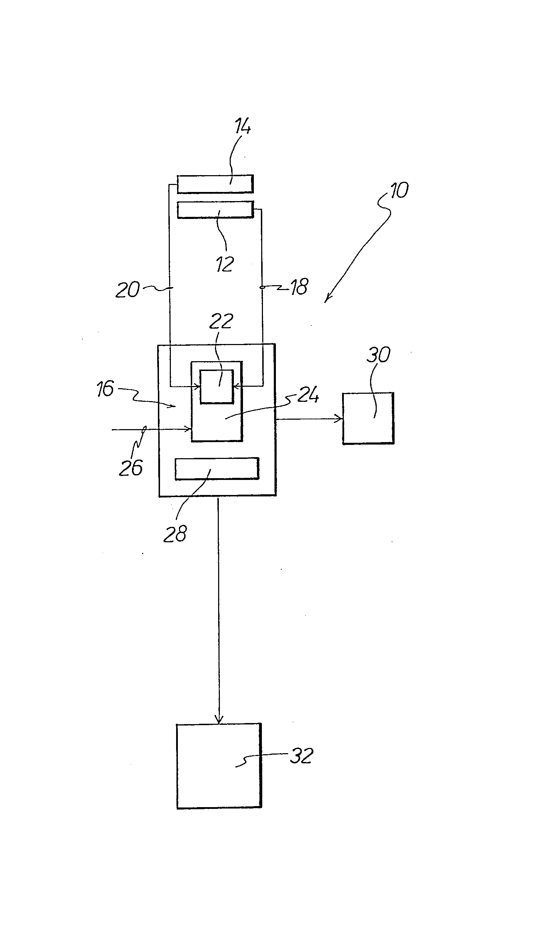

Weitere Einzelheiten, Merkmale und Vorteile ergeben sich aus der nachfolgenden Beschreibung eines in der Zeichnung als Blockschaltbilddarstellung schematisch verdeutlichten Ausführungsbeispieles der erfindungsgemäßen Zeitnahmeeinrichtung für sportliche Wettbewerbe, insbesondere für Brieftaubenpreisflüge.

Die einzige Figur der Zeichnung zeigt eine Zeitnahmeeinrichtung 10 für einen berührungslos abfragbaren Teilnehmer-Kennungsträger 12, der eine individuelle, elektronisch kodierte Registernummer enthält. Außerdem trägt der Teilnehmer einen zweiten Kennungsträger 14 mit der üblichen Verbandsnummer. Der den Teilnehmer elektronisch individualisierende Kennungsträger 12 ist von einem Antennen-Lesegerät erfaßbar und an ein als transportabler Zwischenspeicher eingesetztes Bediengerät 16 übermittelbar, was durch den Pfeil 18 angedeutet ist.

In das Bediengerät 16 ist eine Tabelle 22 eingebbar, die einer individuellen elektronischen Registernummer eines Kennungsträgers 12 die manuell einzugebende Verbandsnummer vom herkömmlichen Kennungsträger 14 zuordnet, vgl. Pfeil 20. Die Tabelle 22 ist in einem elektronischen Speicher 24 abgelegt, bei dem es sich um einen nicht flüchtigen Speicher handelt, der löschbar und zum Überschreiben freigebbar ist, was durch den Pfeil 26 symbolisiert wird.

Das Bediengerät 16 ist auch mit einer Anzeigeeinrichtung 28 ausgestattet, bei der es sich um eine LCD-Anzeige handeln kann. Sie dient der Darbietung einer aus der dekodierten individuellen Registernummern abgeleiteten Information, wenn in der Tabelle 22 keine Verbandsnummer-Zuordnung zur Anzeige vorrätig ist.

Das Lesegerät für die elektronisch erfaßbaren Registernummern kann in das Bediengerät 16 integriert sein, zweckmäßigerweise läßt sich letzteres aber separat handhaben. Das Bediengerät 16 kann an einen Drucker 30 und/oder einen zentralen Auswerte-Computer 32 angeschlossen werden, wobei der Drucker 30 z. B. in der Nachbarschaft eines separat betreibbaren Lesegerätes, beispielsweise beim Schlag eines Taubenzüchters, installiert sein kann, während der zentrale Auswerte-Computer 32 beispielsweise in einem Vereinsheim betrieben wird, um aufgrund einer Verknüpfung abgespeicherter Registernummern mit Echtzeitinformationen eine programmgesteuerte Sieger-Einreihung im Vergleich mit den Teilnehmern, d. h. Brieftauben, anderer Züchter vornehmen zu können.

Eine Brieftaube erhält einen Ring mit einem elektronischen Transponder, der für die Wettbewerbs-Zeitnahme bei der Ankunft am Taubenschlag mittels eines Hochfrequenzfeldes abgefragt werden kann, um die Ankunftszeit dieser individuellen Taube zugeordnet abspeichern und später für Siegerlisten auswerten zu können. Zusätzlich trägt die Taube einen herkömmlichen (also nicht unbedingt automatisch ablesbaren) Ring mit der Meldenummer ihres Verbandes. Zwischen diesen beiden Datensätzen (elektronische Identnummer und konventionelle Verbandsnummer) besteht keine Beziehung, was den Züchter bei seiner Tauben-Zuordnung irritieren kann. Deshalb wird in das Bediengerät für die kontaktlose Hochfrequenz-Abfrage des Identträgers zusätzlich eine Tabelle eingespeist, in der die Identnummern und die Verbandsnummern der Tauben einander zugeordnet sind. Angezeigt wird auf dem Display dann nicht die elektronisch erfaßte Identnummer der gerade eingetroffenen Taube sondern die aus der Speichertabelle dazu ausgelesene, dem Züchter vertrautere konventionelle Verbandsnummer.

## Patentansprüche

1. Zeitnahmeeinrichtung für sportliche Wettbewerbe, insbesondere für Brieftaubenpreisflüge, mit einem berührungslos abfragbaren Teilnehmer-Kennungsträger (12) und einer Registriereinrichtung für einander zugeordnete Teilnehmer- und Zeitinformationen, wobei jeder Teilnehmer dauernd mit einem ihn individualisierenden Kennungsträger (12) ausgestattet ist, der eine individuelle kodierte Registernummer enthält, die von einem Lesegerät aktivierbar und abfragbar und in einen Speicher (24) übergebbar ist,
dadurch gekennzeichnet,
daß für den Teilnehmer ein zweiter Kennungsträger (14) vorgesehen ist, der eine Verbandsnummer enthält.

2. Einrichtung nach Anspruch 1,
dadurch gekennzeichnet,
daß zu einer vom Lesegerät elektronisch erfaßten Registernummer in einer Tabelle (22) die Zuordnung zur Verbandsnummer abspeicherbar ist.

3. Einrichtung nach Anspruch 1 oder 2,
gekennzeichnet durch
eine Anzeigeeinrichtung (28) zur Anzeige einer von der dekodierten Registernummer abgeleiteten Information, wenn dieser keine Verbandsnummer tabellarisch zugeordnet ist, die andernfalls angezeigt wird.

4. Einrichtung nach einem der vorhergehenden Ansprüche,
dadurch gekennzeichnet,
daß der Speicher (24) nicht-flüchtig aber überschreibbar ist.

5. Einrichtung nach einem der vorhergehenden Ansprüche,
dadurch gekennzeichnet,
daß an den Speicher (24) ein Drucker (30) und/oder ein zentraler Auswerte-Computer (32) zur Ausgabe bzw. Weiterverarbeitung der Verbandsnummer des erfaßten Teilnehmers anschließbar ist.
